# EUROPEAN PATENT APPLICATION

(11) **EP 2 862 737 A1**
(43) Date of publication of application: **22.04.2015**
(21) Application number: 13188781.2
(22) Date of filing: 15.10.2013
(51) Int. Cl.: B60J 1/20, B60J 3/02

(54) **Electric-powered sun visor for vehicle**

(71) Applicant: Hanil Interior Co., Ltd., Jeollabuk-Do 570-998 (KR)
(72) Inventor: Seo, Joong Seok, 570-998 Iksan-City,Jeollabuk-Do (KR)
(74) Representative: Müller & Schubert

(57) **Abstract**

The present invention relates to an electric-powered sun visor for a vehicle that is developed or returned from/to the outside of the front surface glass or the rear surface glass at the interior of the vehicle in an electrically powered manner so as to prevent a driver's or passenger's field of vision from being interrupted by the sunlight entering the driver seat or the passenger seat, and more specifically, to an electric-powered sun visor for a vehicle that is provided with an actuator serving as a power transmitting part, a helical screw as a movement inducing part, slide gears as horizontal distance moving parts, linkages as folding parts, a screen roll as a tension maintaining part, a fixing part having a center stopper, shaft guides and screen roll guides, a screen part, a mounting frame and base covers, whereby the developing and returning operations of the electric-powered sun visor can be accurately performed, the amount of loss of the power transmitted can be substantially decreased to enhance the efficiency of the electric-powered sun visor, the developing and returning operations of the electric-powered sun visor can be easily performed to make it very convenient in use, the electric-powered sun visor can be developed to long width to increase the shading area, the generation of noise when the electric-powered sun visor is developed or returned can be minimized, the movements of the developed shading screen can be prevented, the balance of the force of developing or returning the electric-powered sun visor can be uniformly maintained, the sagging and wrinkling of the shading screen can be prevented, and it is easy to be mounted on the vehicle to improve the mounting operation, the outer appearance of the electric-powered sun visor can be improved when the electric-powered sun visor is mounted, and the driver's or passenger's field of vision can be protected from the sunlight to ensure excellent vision and safe driving.

## Description

### TECHNICAL FIELD

The present invention relates to an electric-powered sun visor for a vehicle that is developed or returned from/to the outside of the front surface glass or the rear surface glass at the interior of the vehicle in an electrically powered manner so as to prevent a driver's or passenger's field of vision from being interrupted by the sunlight entering a driver seat or a passenger seat, and more specifically, to an electric-powered sun visor for a vehicle that is provided with an actuator serving as a power transmitting part, a helical screw as a movement inducing part, slide gears as horizontal distance moving parts, linkages as folding parts, a screen roll as a tension maintaining part, a fixing part having a center stopper, shaft guides and screen roll guides, a screen part, a mounting frame, and base covers, whereby the developing and returning operations of the electric-powered sun visor can be accurately performed, the amount of loss of the power transmitted can be substantially decreased to enhance the efficiency of the electric-powered sun visor, the developing and returning operations of the electric-powered sun visor can be easily performed, it is very convenient in use, the electric-powered sun visor can be developed to long width to increase the shading area, the generation of noise when the electric-powered sun visor is developed or returned can be minimized, the movements of the developed shading screen can be prevented, the balance of the force of developing or returning the electric-powered sun visor can be uniformly maintained, the sagging and wrinkling of the shading screen can be prevented, it is easy to be mounted on the vehicle to improve the mounting operation, the outer appearance of the electric-powered sun visor can be improved when the electric-powered sun visor is mounted, and the driver's or passenger's field of vision can be protected from the sunlight to provide excellent vision to them and to ensure safe driving.

### Background Art

In conventional practices, a sun visor for a vehicle is mounted above the front surface glass in front of a driver seat or a passenger seat in the vehicle so as to prevent a driver's or passenger's field of vision from being interrupted by the sunlight entering a driver seat or a passenger seat, and the conventional sun visor generally includes a body made of a synthetic resin material and serving as a shading plate having an extremely limited area and a folder fastened to the body to allow the body to be moved in up and down or left and right directions by means of the manipulation of the driver or the passenger, thereby preventing the sunlight from entering his or her field of vision.

### Disclosure of Invention

### Technical Problem

In the conventional sun visor for a vehicle, however, the body has to be moved in up and down or left and right directions by means of the direct manipulation of the driver or the passenger so as to prevent the sunlight from entering his or her field of vision, which undesirably does not ensure safe driving.

Further, the shading area on which the sunlight is blocked is extremely restricted by means of the body having extremely limited area, which undesirably makes the sunlight enter the outside of the body, decreases the shading efficiency, and thus makes it inconvenient in use. If the body of the sun visor has a relatively large area in width so as to ensure the shading area, it may obstruct the driver's or passenger's field of vision in front of the driver seat or the passenger seat, which does not ensure his or her field of vision, causes many problems in safe driving, and thus makes him or her feel uncomfortable.

So as to solve the above-mentioned problems, thus, an electric-powered sun visor has been proposed and used wherein a screen or a frame to which the screen is coupled is folded by using a motor and a gear as an electric device and thus the screen is wound or developed. In case of the conventional electric-powered sun visor, however, when the screen or the frame to which the screen is coupled is folded, the folding is not gently performed, and further, the frames constituting the electric-powered sun visors collide against each other upon the folding, which undesirably causes a portion of the frame to be destructed and thus makes it hard to use.

Especially, the amount of power transmitted from the motor to the gear may be lost, and further, the folding frame is not gently folded, which causes the screen coupled to the frame to be not developed or returned easily and thus obstructs the driver's or passenger's field of vision due to the sunlight entering the driver seat or the passenger seat.

Further, during the folding, the screen may be torn out, and during the winding of the screen, the screen may be not returned well, which does not ensure the driver's or passenger's field of vision. On the other hand, the conventional electric-powered sun visor is limited in the developed length below 200mm, which makes it hard to further extend the shading area, and noise occurs when the conventional electric-powered sun visor is developed or returned.

Further, the movements of the screen as the shading screen may occur, and the balance of the force of developing or returning the conventional electric-powered sun visor is not uniformly maintained. Moreover, the screen as the shading screen may sag or wrinkle, and it is not easy for the conventional electric-powered sun visor to be mounted on the vehicle, which decreases the efficiency of the mounting operation. When mounted on the vehicle, further, the conventional electric-powered sun visor does not have good outer appearance.

### Technical Solution

The present invention provides an electric-powered sun visor for a vehicle including an actuator serving as a power transmitting part, a helical screw as a movement inducing part, slide gears as horizontal distance moving parts, linkages as folding parts, a screen roll as a tension maintaining part, a fixing part having a center stopper, shaft guides and screen roll guides, a screen part, a mounting frame, and base covers, whereby the developing and returning operations of the electric-powered sun visor can be accurately performed, the amount of loss of the power transmitted can be substantially decreased to enhance the efficiency of the electric-powered sun visor, the developing and returning operations of the electric-powered sun visor can be easily performed, it is very convenient in use, the electric-powered sun visor can be developed to long width to increase the shading area, the generation of noise when the electric-powered sun visor is developed or returned can be minimized, the movements of the developed shading screen can be prevented, the balance of the force of developing or returning the electric-powered sun visor can be uniformly maintained, the sagging and wrinkling of the shading screen can be prevented, it is easy to be mounted on the vehicle to improve the mounting operation, the outer appearance of the electric-powered sun visor can be improved when the electric-powered sun visor is mounted, and the driver's or passenger's field of vision can be protected from the sunlight to provide excellent vision to them and to ensure safe driving.

### BRIEF DESCRIPTION OF THE DRAWINGS

The invention will be understood more fully, while still further objects and advantages will become apparent, in the following detailed description of preferred embodiments of the invention illustrated in the accompanying drawing, in which:
Fig. 1 is an exploded perspective view showing an electric-powered sun visor for a vehicle according to the present invention;
Fig. 2 is an enlarged perspective view showing a portion of the electric-powered sun visor for a vehicle according to the present invention;
Fig. 3 is an exemplary view showing the use state of the electric-powered sun visor for a vehicle according to the present invention;
Figs. 4 and 5 are perspective views showing the dissembling and assembling states of a tension maintaining part of the electric-powered sun visor for a vehicle according to the present invention;
Figs. 6 and 7 are perspective views showing the developed state of the electric-powered sun visor for a vehicle according to the present invention and the states of the parts therein; and
Fig. 8 is a perspective view showing the returned state of the electric-powered sun visor for a vehicle according to the present invention.

### Best Mode for Currying Out the Invention

Hereinafter, an explanation on an electric-powered sun visor for a vehicle according to the present invention will be in detail given with reference to the attached drawing.

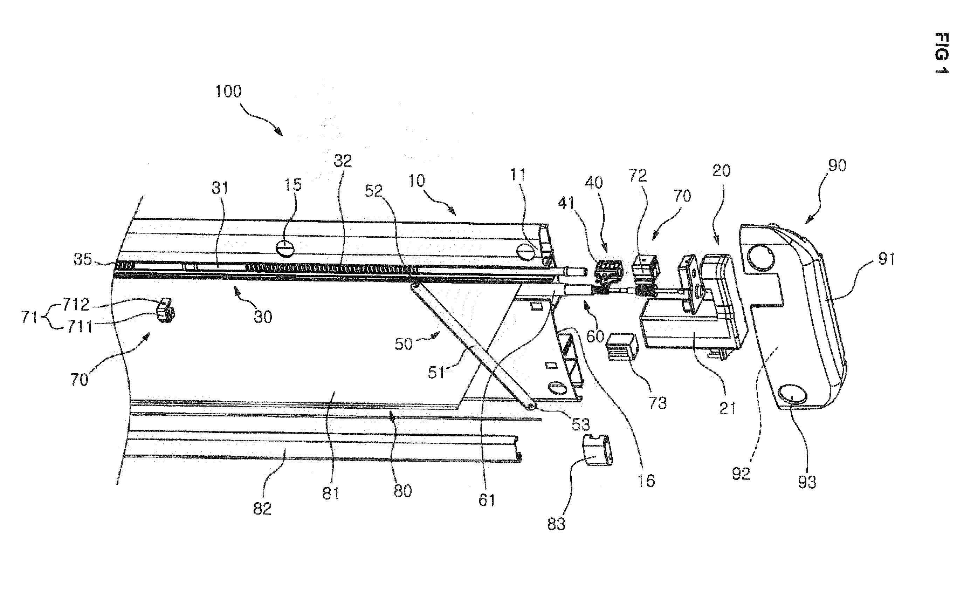

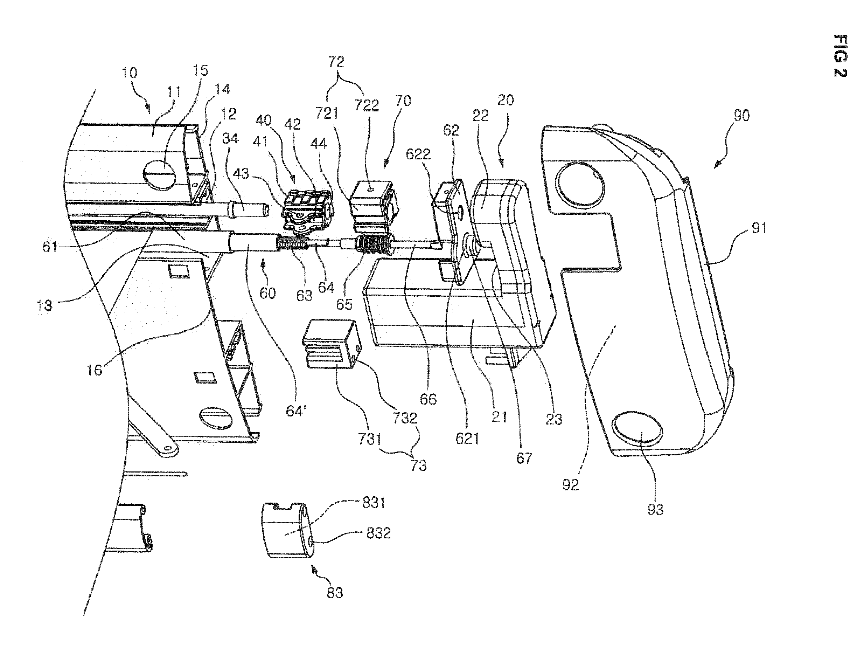

As shown in Figs. 1 and 2, the present invention relates to an electric-powered sun visor for a vehicle that is mounted at a vehicle frame disposed above the front surface glass or the rear surface glass at the interior of the vehicle in such a manner as to allow a shading screen to be developed or returned in an electrically powered manner, thereby preventing a driver's or passenger's field of vision from being interrupted by the sunlight entering a driver seat or a passenger seat.

An electric-powered sun visor 100 for a vehicle according to the present invention includes: a mounting frame 10 adapted to mount parts 20 to 90 as will be discussed later thereon and fixed to the vehicle; the power transmitting part 20 serving as an actuator mounted on one side surface of the mounting frame 10, from which power is transmitted; the movement inducing part 30 mounted into a first mounting hole 12 of the mounting frame 10 and formed of a helical screw driven by the power transmitted directly from the power transmitting part 20; the horizontal distance moving parts 40 each mounted onto the outside of the movement inducing part 30 and formed of a slide gear moved forward and backward in a horizontal direction by means of the rotation of the movement inducing part 30 as the helical screw; the folding parts 50 each serving as a linkage fastened to the horizontal distance moving parts 40 and the screen part 80 and folded to the inside and outside of the mounting frame 10 through the horizontal distance movements of the horizontal distance moving parts 40; the tension maintaining part 60 serving as a screen roll mounted into a second mounting hole 13 of the mounting frame 10 and adapted to maintain the tension upon the development and return of a shading screen 81, the tension maintaining part 60 having a body 61, a spring cover 62, a spring 63, first and second noise preventing tubes 64 and 64', a spring cap 65, a fastening bar 66, and spring roll caps 67; the fixing part 70 having a center stopper 71 fixed on the center surface of the movement inducing part 30, shaft guides 72 fixed on both side surfaces of the movement inducing part 30, and screen roll guides 73 fixed on both side surfaces of the screen roll 60; the screen part 80 adapted to be wound on the outer peripheral surface of the body 61 of the tension maintaining part 60 and having the shading screen 81 returned or developed to/from the inside and outside of the body 61, a support bar 82, and support bar covers 83; and the base covers 90 coupled to both side surfaces of the mounting frame 10 to prevent each part from being escaped to the outside and to improve the outer appearance of the sun visor.

According to the present invention, under the above-mentioned structure, the number of electric-powered sun visors 100 for a vehicle is plural, and they are fixedly mounted at the vehicle frame disposed above the front surface glass or the rear surface glass in front of or behind a driver seat or a passenger seat at the interior of the vehicle. Hereinafter, an explanation on each part will be given with respect to one electric-powered sun visor 100.

Of course, the plurality of electric-powered sun visors 100 for a vehicle according to the present invention having the same structure as each other may be fixedly mounted at the vehicle frame disposed above the front surface glass or the rear surface glass in front of or behind a driver seat or a passenger seat at the interior of the vehicle.

The mounting frame 10 includes: a body 11 made of a metal or synthetic resin material and adapted to mount the parts 20 to 90 thereon in such a manner as to be fixed to the vehicle frame disposed above the front surface glass or the rear surface glass in front of or behind a driver seat or a passenger seat at the interior of the vehicle; the first mounting hole 12 formed on one side surface of the body 11, into which the movement inducing part 30 formed of the helical gear is insertedly mounted; the second mounting hole 13 formed on the side surface of the first mounting hole 12, into which the screen roll body 61 of the tension maintaining part 60 is insertedly mounted; a layer 16 formed on the side surface of the second mounting hole 13 to insertingly lay the front surface portion of the body 21 of the power transmitting part 20 thereon; cover mounting holes 14 formed on both side surfaces of the body 11 to mount the base covers 90 thereon; and fixing holes 15 formed on both side surfaces of the underside of the body 11 to allow the body 11 and the base cover body 91 to be fixed by means of fasteners to the vehicle frame disposed above the front surface glass or the rear surface glass in front of or behind a driver seat or a passenger seat at the interior of the vehicle.

The power transmitting part 20 includes: a body 21 mounted on one side surface of the mounting frame 10 and having a motor mounted at the inside thereof to generate power from an output shaft of the motor through the driving of the motor by the application of power thereto; a helical screw fastening hole 22 formed on one side surface of the body 21 to fasten one side surface of the helical screw 30 passing through a through-hole 622 of the spring cover 62 thereto; and a screen cover insertion hole 23 formed below the helical screw fastening hole 22 to insertingly mount the spring cover 62 to which the body 61 of the tension maintaining part 60 is fixed thereinto.

Accordingly, one side peripheral surface 34 of the helical screw as the movement inducing part 30 fastened to the helical screw fastening hole 22 is fastened to the output shaft of the motor embedded in the body 21, so that the power generated by the positive or negative current outputted from the output shaft is transmitted directly to the helical screw body 31, and thus, the helical screw 30 is rotated in clockwise or counterclockwise direction by the positive or negative current transmitted directly from the body 31.

Also, the front surface portion of the body 21 is insertedly laid on the layer 16 of the mounting frame 10, and the rear surface portion of the body 21 is inserted into an insertion hole 92 defined as the internal space of each base cover 90, so that when the mounting frame 10 and each base cover 90 are assembled to each other and fixedly mounted to the vehicle, the movements of the body 11 and the escape of the body 11 to the outside can be prevented.

The movement inducing part 30 as the helical screw includes: a body 31 mounted into the first mounting hole 12 of the mounting frame 10, passed through the through-hole 622 of the spring cover 62 of the tension maintaining part 60, and fastened on one side surface thereof to the helical screw fastening hole 22 of the power transmitting part 20 in such a manner as to be rotated in clockwise or counterclockwise direction by the positive or negative current transmitted directly from the output shaft of the motor of the power transmitting part 20 to the helical screw fastening hole 22; and a screw line 32 having an inclined surface between 15° and 45° formed on one side peripheral surface 34 of the body 31 in such a manner where a forward arranged screw line is formed or a reverse arranged screw line is formed to have the reverse inclined surface to the inclined surface of the forward arranged screw line, while the screw line 32 being formed on the other side peripheral surface 35 of the body 31 in such a manner where the reverse arranged screw line or the forward arranged screw line is formed reversely with respect to the forward arranged screw line or the reverse arranged screw line formed on one side peripheral surface 34 of the body 31.

Through the rotation of the body 31 having the forward or reverse arranged screw line 32 formed on one side peripheral surface 34 thereof in the clockwise or counterclockwise direction, the slide gear as the horizontal distance moving part 40 fastened to one side peripheral surface 34 of the body 31 is moved forward to the center 33 of the body 31 or moved backward to one side peripheral surface 34 of the body 31 in a horizontal direction thereof.

Through the rotation of the body 31 having the reverse or forward arranged screw line 32 formed on the other side peripheral surface 35 thereof in the clockwise or counterclockwise direction, the slide gear 40 as the horizontal distance moving part fastened to the other side peripheral surface 35 of the body 31 is moved forward to the center 33 of the body 31 or moved backward to the other side peripheral surface 35 of the body 31 in a horizontal direction thereof.

Each horizontal distance moving part 40 as the slide gear includes: a body 41 mounted to the outside of one side peripheral surface 34 and the other side peripheral surface 35 of the helical screw body 31 on which the forward or reverse arranged screw line 32 of the movement inducing part 30 is formed in such a manner as to be moved forward to the center 33 of the helical screw body 31 or moved backward to one side peripheral surface 34 and the other side peripheral surface 35 of the body 31 in a horizontal direction thereof through the rotation of the helical screw body 31 in the clockwise or counterclockwise direction; a fixing hole 42 defined as a space portion formed on the outside of the body 41 to fix the outer peripheral surface of the helical screw body 31 and to fasten the linkage 50 thereto; linkage fastening holes 43 formed on the top and bottom portions of the fixing hole 42; and a through-hole 44 formed on the side surface of the body 41 to pass one side peripheral surface 34 of the helical screw 30 therethrough.

For example, while the helical screw as the movement inducing part 30 is being rotated in the clockwise or counterclockwise direction, the slide gear 40 is moved forward by 110mm to the center 33 of the helical screw 30 or moved backward by 110mm to one side peripheral surface 34 and the other side peripheral surface 35 of the body 31 in the horizontal direction on the outer peripheral surface of the helical screw 30. Of course, the forward or backward moving distance of the slide gear may be more increased than 110mm if needed.

Each folding part 50 as the linkage includes: a body 51 fastened to the slide gear as the horizontal distance moving part 40 and the support bar cover 83 of the screen part 80 in such a manner as to be folded to the inside and outside of the mounting frame 10 in accordance with the forward and backward movements of the horizontal distance of the slide gear 40; a first fastening hole 52 formed on the upper portion of the body 51 to fasten the linkage fastening holes 43 of the slide gear 40 thereto; and a second fastening hole 53 formed on the lower portion of the body 51 to fasten a linkage fastening hole 831 of the support bar cover 83 thereto.

For example, when the slide gear 40 is moved forward by 110mm to the center 33 of the helical screw 30 in the horizontal direction from the outside of the helical screw 30, the linkage 50 is rotated to 60° and thus developed to the outside of the mounting frame 10, and contrarily, when the slide gear 40 is moved backward by 110mm to one side peripheral surface 34 or the other side peripheral surface 35 of the helical screw 30 in the horizontal direction from the outside of the helical screw 30, the linkage 50 is rotated reversely to 60° and thus returned to the inside of the mounting frame 10.

Further, after the linkage 50 is rotated to 60° and thus developed to the outside of the mounting frame 10, it is maintained to the folded angle of 40° on one side surface of the shading screen 81 to allow the shading screen 81 to be functioned well.

According to the present invention, the linkage 50 has one single body 51, which is different from the conventional practice wherein a plurality of linkages is connected, so that the movements of the linkage 50 caused by external impacts upon the development to the outside can be fully prevented, and further, the balance of the force of the linkage 50 can be maintained to the folded angle of 40° on the rear surface of the shading screen 81, thereby preventing the shading screen 81 from sagging and wrinkling.

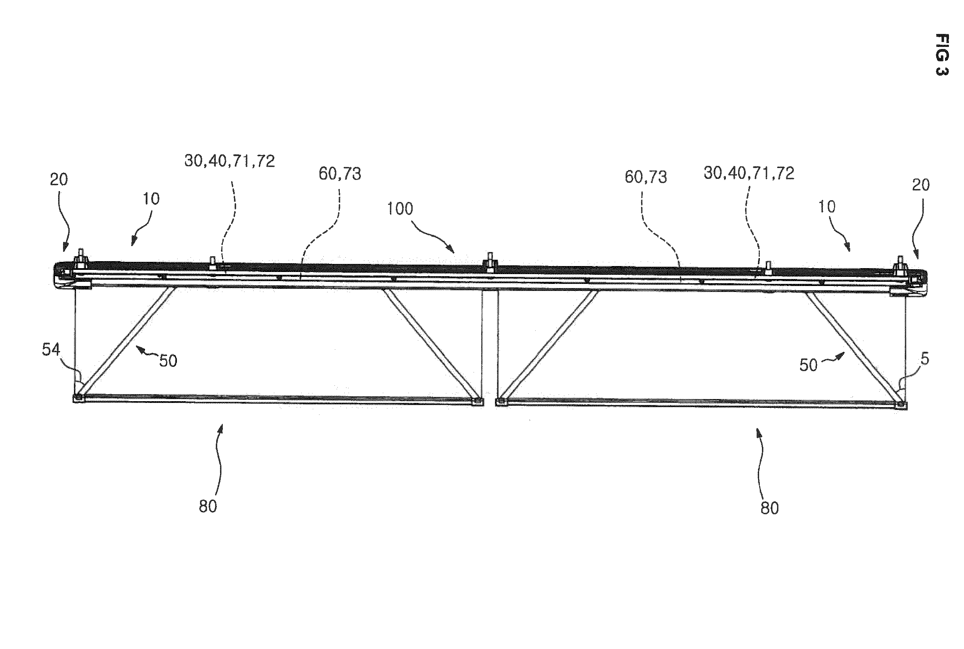

As shown in Fig.3, the power transmitting part 20, the movement inducing part 30, the horizontal distance moving parts 40 and the folding parts 50 as mentioned above and the tension maintaining part 60, the fixing part 70 and the screen part 80 as will be in detail discussed later are mounted on one side surface of the mounting frame 10 of one electric-powered sun visor 100 for a vehicle fixedly disposed above the front surface glass or the rear surface glass at the interior of the vehicle.

Accordingly, the electric-powered sun visor 100 for a vehicle according to the present invention is configured wherein the power transmitting part 20, the movement inducing part 30, the horizontal distance moving parts 40 and the folding parts 50 as mentioned above and the tension maintaining part 60, the fixing part 70 and the screen part 80 as will be in detail discussed later, which have the same configuration as those in the above, are mounted on the other side surface of the mounting frame 10 in symmetrical relation to those mounted on one side surface of the mounting frame 10.

As the power transmitting parts 20, the movement inducing parts 30, the horizontal distance moving parts 40, the folding parts 50, the tension maintaining parts 60, the fixing parts 70 and the screen parts 80 mounted on one side surface and the other side surface of the mounting frame 10 are driven, the screen shades 81 are developed to the outside of the mounting frame 10 or returned to the inside of the mounting frame 10.

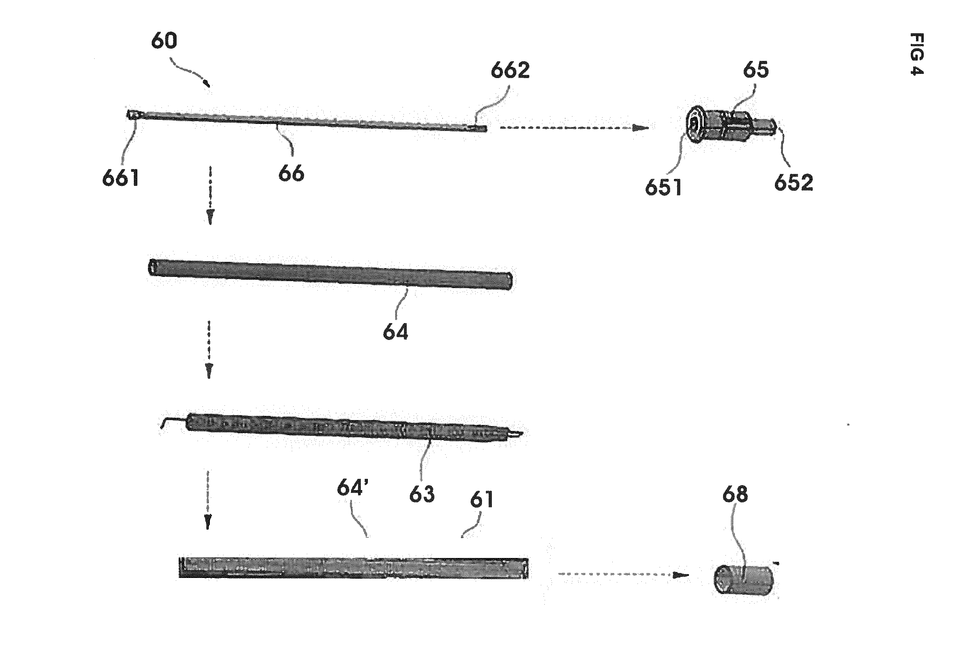

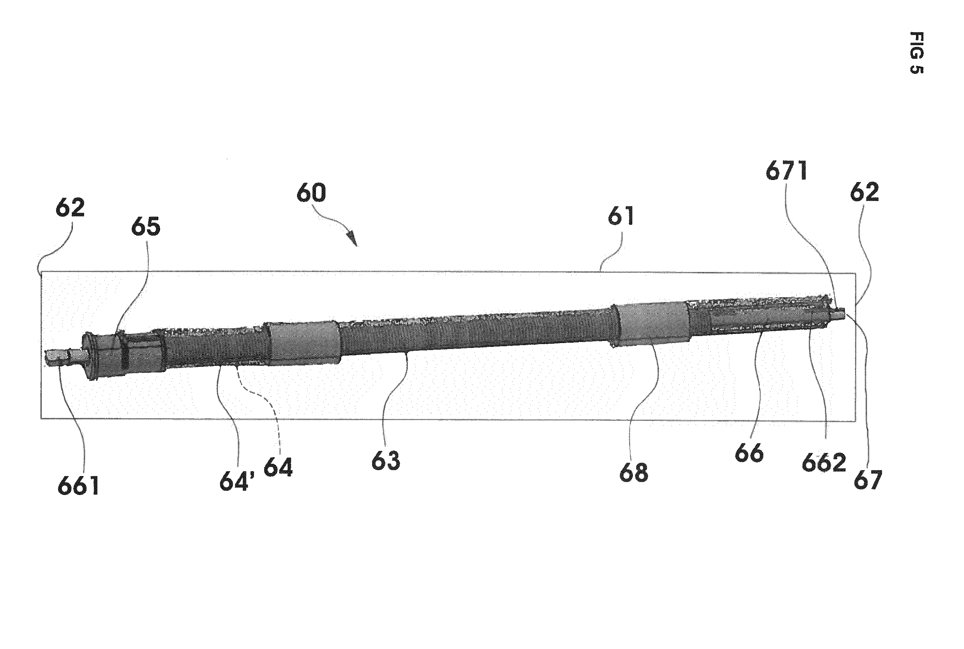

Figs. 1 and 2 are exploded and enlarged perspective views showing the electric-powered sun visor for a vehicle according to the present invention and Figs. 4 and 5 are perspective views showing the dissembling and assembling states of the tension maintaining part of the electric-powered sun visor for a vehicle according to the present invention. For the convenience of the description, as shown, the right side with respect to Figs.1 and 2 corresponds to one side surface of the tension maintaining part 60, and the left side corresponds to the other side surface of the tension maintaining part 60 (wherein those in Figs.4 and 5 are symmetrical to those in Figs.1 and 2).

The tension maintaining part 60 as the screen roll includes: the cylindrical body 61 mounted into the second mounting hole 13 of the mounting frame 10 to develop or return the shading screen 81 wound on the outer peripheral surface thereof; the spring cover 62 having a fastener fastening hole 621 adapted to fasten a fastener 661 of a fastening bar 66 mounted on one side peripheral surface of the body 61 thereto and the through-hole 622 formed above the fastener fastening hole 621 to pass one side peripheral surface 34 of the helical screw 30 therethrough; the spring 63 to which extension force is applied; the first and second noise preventing tubes 64 and 64' made of a rubber material and mounted outside and inside the spring 63 to prevent the generation of noise when the shading screen 81 is developed or returned; the spring cap 65 having a spring mounting portion 652 on which the other side surface of the spring 63 is fixedly mounted formed on the other side surface thereof and a fastening bar insertion hole 651 formed on one side surface thereof to insert the fastening bar 66 thereinto; the fastening bar 66 inserted into the spring 63 having the first and second noise preventing tubes 64 and 64' and into the spring cap 65 and having the fastener 661 mounted on one side surface thereof in such a manner as to be fixedly inserted into the fastener fastening hole 621 of the spring cover 62 and the fastening hole 662 formed on the other side surface thereof in such a manner as to fasten a roll fastener 671 of the spring roll cap 67 inserted into the other side surface of the body 61 to fasten the fastening bar 66 thereto; and the spring roll cap 67 inserted into the other side surface of the body 61 and having the roll fastener 671 fastened to the fastening hole 662 of the fastening bar 66.

The spring 63 is mounted inside the cylindrical body 61 functioning as a winder, in the state where the first and second noise preventing tubes 64 and 64' are mounted outside and inside the spring 63, and the fastening bar 66 is inserted into the interior of the spring 63. Next, the spring cap 65 and the spring roll cap 67 are fastened to both side surfaces of the fastening bar 66.

After that, the spring cover 62 is mounted on both side surfaces of the body 61 in such a manner where the fastener 661 of the fastening bar 66 is fastened to the fastener fastening hole 621 of the spring cover 62 mounted on one side surface of the body 61 and the other side surface of the roll fastener 671 of the spring roll cap 67 is fastened to the fastener fastening hole 621 of the spring cover 62 mounted on the other side surface of the body 61, thereby allowing the spring 63 to have the extension force in the interior of the body 61.

When the shading screen 81 is developed and returned, accordingly, the tension of the shading screen 81 is easily maintained and the generation of the noise is prevented. Further, the spring 63 is fixed in the interior of the body 61, from which the extension force is applied, and the body 61 is not moved to prevent the shading screen 81 from being moved due to the external impact generated upon the development to the outside.

Further, the tension maintaining part 60 includes a cylindrical non-woven fabric 68 mounted on the outer peripheral surface of the second noise preventing tube 64' to further prevent the generation of noise during the operation of the spring 63 and the movement of the spring 63.

The fixing part 70 (see Figs.1 to 3) includes: the center stopper 71 fixed to the center 33 of the helical screw 30 and having a body 711 adapted to restrict the moving distances of the slide gears 40 and prevent the collision of the slide gears 40 when the slide gears 40 are horizontally moved in reverse directions to each other by means of the forward arranged screw line 32 or the reverse arranged screw line 32 and a fixing hole 712 formed in the interior of the body 711; the shaft guides 72 fixed to both side surfaces 34 and 35 of the helical screw 30, each shaft guide 72 having a body 721 adapted to restrict the escape to the outside and movement of each slide gear 40 and a fixing hole 722 formed in the interior of the body 722; and the screen roll guides 73 fixed to both side surfaces of the screen roll 60, each screen roll guide 73 having a body 731 to prevent the escape to the outside of the screen roll 60 and a fixing hole 732 formed in the interior of the body 732.

The screen part 80 (see Figs.1 to 3) includes: the shading screen 81 as a body adapted to be wound on the outer peripheral surface of the body 61 of the tension maintaining part 60 in such a manner as to be returned or developed to/from the inside and outside of the body 61; the support bar 82 mounted on the bottom portion of the body 81 to prevent the shading screen 81 from sagging or wrinkling upon the development of the shading screen 81; and the support bar covers 83 coupled to both side surfaces of the support bar 82, each having the linkage fastening hole 831 fastened to correspond to the second fastening hole 53 of the linkage 50 as the folding part and support bar fastening holes 832 formed on the interior and side surface thereof in such a manner as to be fastened to both side surfaces of the support bar 82.

The lower portion of the linkage 50 is fastened to the linkage fastening hole 831 of each support bar cover 83, and as the linkage 50 is moved, the body 81 as the shading screen laid on the outside of the linkage 50 is returned or developed to/from the inside and outside of the body 61 of the tension maintaining part 60.

The support bar 82 is fastened to the support bar fastening holes 832 of each support bar cover 83 and further prevents the shading screen 81 from sagging or wrinkling upon the development of the shading screen 81.

The base cover 90 includes: the body 91 coupled to the cover mounting holes 14 formed on both side surfaces of the mounting frame 10 to prevent each part (20 to 70) from being escaped to the outside and to improve the outer appearance of the sun visor 100; the insertion hole 92 formed in the interior of the body 91 to insert the rear surface portion of the body 21 of the power transmitting part 20; and the fixing holes 93 formed to correspond to the fixing holes 15 of the mounting frame 10 in such a manner as to allow the base cover 90 and the mounting frame 10 to be fixed through fasteners to the vehicle frame disposed above the front surface glass or the rear surface glass in front of or behind the driver seat or the passenger seat in the interior of the vehicle.

Through the formation of the base cover 90, accordingly, the escape of each part (20 to 80) to the outside can be prevented and the outer appearance of the electric-powered sun visor 100 according to the present invention can be substantially improved.

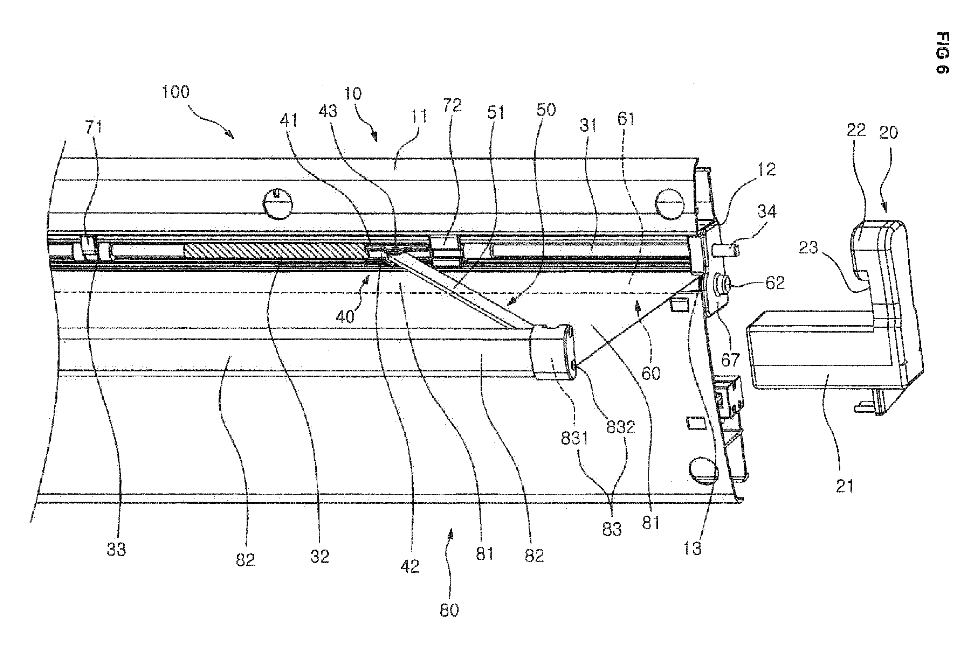

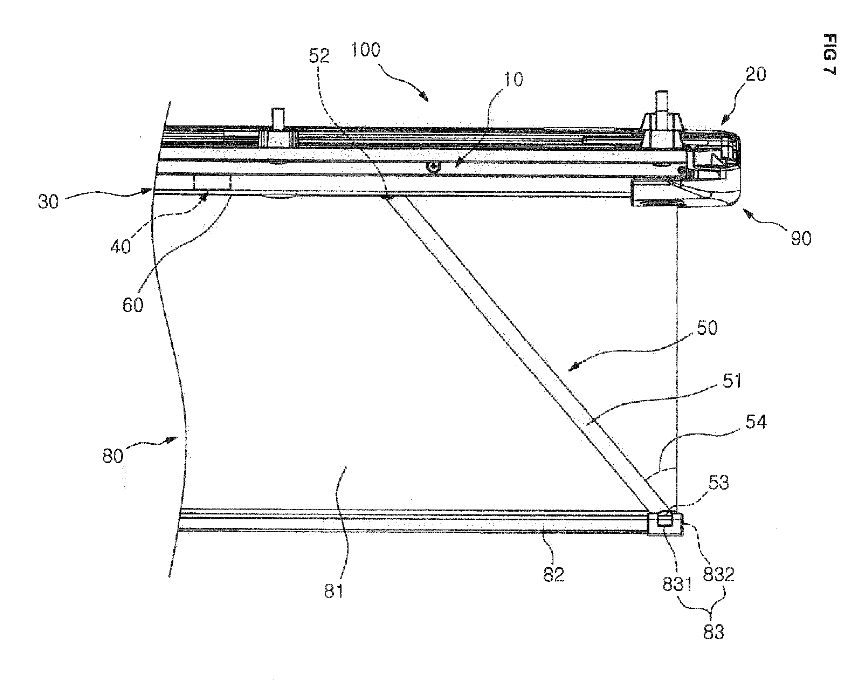

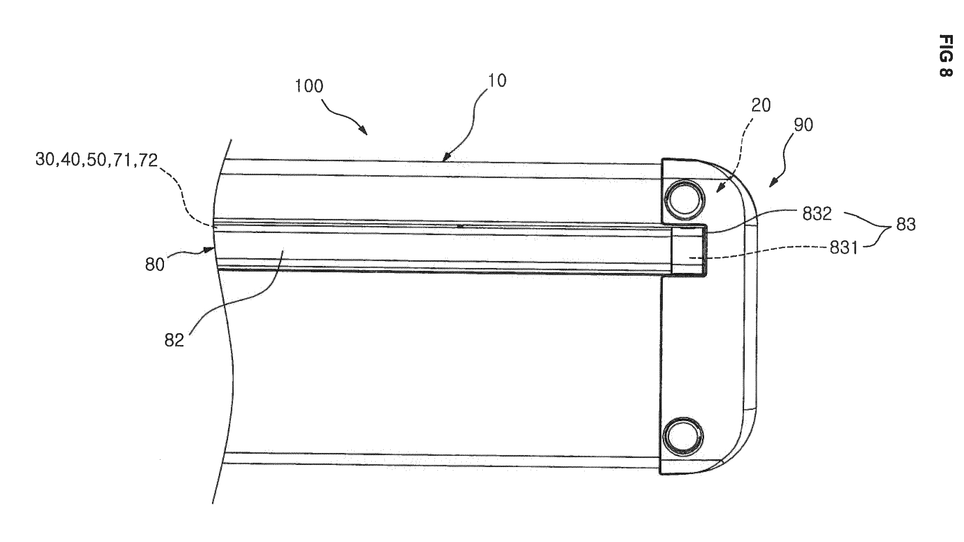

As shown in Figs.6 to 8, through the electric-powered sun visor 100 for a vehicle according to the present invention having the mounting frame 10, the power transmitting part 20, the movement inducing part 30, the horizontal distance moving parts 40, the folding parts 50, the tension maintaining part 60, the fixing part 70, the screen part 80, the base covers 90 configured to have the above-mentioned structure, when the shading screen 81 is developed or returned from/to the outside or inside of the mounting frame 10 mounted on the vehicle, the helical screw as the movement inducing part 30 is directly connected to the actuator as the power transmitting part 20, which prevents the amount of loss of the power transmitted from being substantially decreased and thus enhances the efficiency of the sun visor 100.

Through the rotation of the helical gear as the movement inducing part 30, the slide gear as the horizontal distance moving part 40 is easily moved forward and backward horizontally in the interior of the mounting frame 10, and thus, the linkage 50 as the folding part 50 fastened to the slide gear is easily developed or returned.

For example, when the slide gears 40 are moved forward by 110mm to the center 33 of the helical screw 30 in the horizontal direction on the outer peripheral surface of the helical screw 30, the linkages 50 are rotated to 60° and thus developed to the outside of the mounting frame 10, and contrarily, when the slide gears 40 are moved backward by 110mm to one side surface 34 and the other side surface 35 of the helical screw 30 in the horizontal direction, the linkages 50 are rotated reversely to 60° and thus returned to the inside of the mounting frame 10.

Further, after the linkages 50 are rotated to 60° and thus developed to the outside of the mounting frame 10, they are maintained to the folded angle of 40° (denoted by 54 in FIG.3) on one side surface of the shading screen 81 to allow the shading screen 81 to be functioned well.

According to the present invention, each linkage 50 has one single body 51, which is different from the conventional practice wherein a plurality of linkages is connected, so that the movements of the linkage 50 caused by external impacts upon the development to the outside can be fully prevented, and further, the balance of the force of the linkage 50 can be maintained to the folded angle of 40° on the rear surface of the shading screen 81, thereby preventing the shading screen 81 from sagging and wrinkling. If necessary, the horizontally forward or backward moving distance of each slide gear 40 may be set within 300mm, which causes the development length of the shading screen 81 to be extended to increase the shading area.

The first and second noise preventing tubes 64 and 64' made of the rubber material are mounted outside and inside the spring 63 of the tension maintaining part 60, thereby preventing the generation of noise when the screen part 80 is developed or returned, and the formation of the spring cover 62, the spring cap 65 and the spring roll cap 67 prevents the movements of the shading screen 81, while the balance of the force of developing or returning the shading screen 81 is being uniformly maintained. Further, the sagging and wrinkling of the shading screen 81 can be further prevented by means of the support bar 82 of the screen part 80.

The power transmitting part 20 is inserted into the layer 16 of the mounting frame 10 and into the insertion hole 92 of each base cover 90, and then, the base covers 90 are mounted on both side surfaces of the mounting frame 10 in which the movement inducing part 30, the horizontal distance moving parts 40, the folding parts 50, the tension maintaining part 60, and the fixing part 70 are embedded in the first and second mounting holes 12 and 13 thereof. Next, the fasteners are fastened to the fixing holes 15 and 93 formed to pass through the mounting frame 10 and each base cover 90, which enables the mounting and dismounting to be easily performed.

When the sun visor 100 is mounted on the vehicle, the outer appearance thereof can be more improved by means of the formation of the base covers 90. Accordingly, the electric-powered sun visor 100 for a vehicle according to the present invention can protect the driver's or passenger's field of vision from the sunlight, thereby ensuring excellent vision and safe driving.

If necessary, furthermore, one electric-powered sun visor 100 for a vehicle according to the present invention, not the plurality of electric-powered sun visors 100 for a vehicle, may be mounted on the vehicle frame above the front surface glass or the rear surface glass in front of or behind the driver seat or the passenger seat at the interior of the vehicle.

On the other hand, the electric-powered sun visor 100 for a vehicle according to the present invention may be configured with no center stopper 71 and shaft guides 72 fixed to the center surface 33 and both side peripheral surfaces 34 and 35 of the movement inducting part 30 and no screen roll guides 73 fixed to both side surfaces of the screen roll 60.

### Advantageous Effects

As described above, the electric-powered sun visor for a vehicle according to the present invention has the following advantages:
First, the conventional problems as mentioned above can be solved.
Second, the developing and returning operations of the shading screen can be accurately performed, and the amount of loss of the power transmitted can be substantially decreased to enhance the efficiency of the sun visor.
Third, the developing and returning operations of the shading screen can be easily performed, and it is very convenient in use.
Fourth, the shading screen can be developed to long width to increase the shading area.
Fifth, the generation of noise when the shading screen is developed or returned can be minimized, the movements of the shading screen can be prevented, and the balance of the force of developing or returning the shading screen can be uniformly maintained.
Sixth, the sagging and wrinkling of the shading screen can be prevented, and it is easy to be mounted on the vehicle to improve the mounting operation.
Seventh, the outer appearance of the sun visor can be improved when the sun visor is mounted, and the driver's or passenger's field of vision can be protected from the sunlight to ensure excellent vision and safe driving.

It is to be understood that the above detailed description of preferred embodiments of the invention are provided by way of example only. Various details of design, construction and procedure may be modified without departing from the true spirit and scope of the invention, as set forth in the appended claims.

## Claims

1. An electric-powered sun visor (100) for a vehicle mounted at a vehicle frame disposed above the front surface glass or the rear surface glass at the interior of the vehicle in such a manner as to allow a shading screen to be developed or returned in an electrically powered manner, the electric-powered sun visor (100) comprising:
a mounting frame (10) adapted to mount parts (20) to (90) thereon and fixed to the vehicle;
the power transmitting part (20) serving as an actuator mounted on one side surface of the mounting frame (10), from which power is transmitted;
the movement inducing part (30) mounted into a first mounting hole (12) of the mounting frame (10) and formed of a helical screw driven by the power transmitted directly from the power transmitting part (20);
the horizontal distance moving parts (40) each mounted onto the outside of the movement inducing part (30) and formed of a slide gear moved forward and backward in a horizontal direction by means of the rotation of the movement inducing part (30) as the helical screw;
the folding parts (50) each serving as a linkage fastened to each horizontal distance moving part (40) and the screen part (80) and folded to the inside and outside of the mounting frame (10) through the horizontal distance movements of each horizontal distance moving part (40);
the tension maintaining part (60) serving as a screen roll mounted into a second mounting hole (13) of the mounting frame (10) and adapted to maintain the tension upon the development and return of a shading screen (81), the tension maintaining part (60) having a body (61), a spring cover (62), a spring (63), first and second noise preventing tubes (64) and (64'), a spring cap (65), a fastening bar (66), and a spring roll cap (67);
the fixing part (70) having a center stopper (71) fixed on the center surface of the movement inducing part (30), shaft guides (72) fixed on both side surfaces of the movement inducing part (30), and screen roll guides (73) fixed on both side surfaces of the screen roll (60);
the screen part (80) adapted to be wound on the outer peripheral surface of the body (61) of the tension maintaining part (60) and having the shading screen (81) returned or developed to/from the inside and outside of the body (61), a support bar (82), and support bar covers (83); and
the base covers (90) coupled to both side surfaces of the mounting frame 10 to prevent each part from being escaped to the outside and to improve the outer appearance of the sun visor.

2. The electric-powered sun visor for a vehicle according to claim 1,
wherein the mounting frame (10) comprises:
a body (11) made of a metal or synthetic resin material and adapted to mount the parts (20) to (90) thereon in such a manner as to be fixed to the vehicle frame disposed above the front surface glass or the rear surface glass at the interior of the vehicle;
the first mounting hole (12) formed on one side surface of the body (11), into which the movement inducing part (30) formed of the helical gear is insertedly mounted;
the second mounting hole (13) formed on the side surface of the first mounting hole (12), into which the screen roll body (61) of the tension maintaining part (60) is insertedly mounted;
a layer (16) formed on the side surface of the second mounting hole (13) to insertingly lay the front surface portion of the body (21) of the power transmitting part (20) thereon;
cover mounting holes (14) formed on both side surfaces of the body (11) to mount the base covers (90) thereon; and
fixing holes (15) formed on both side surfaces of the underside of the body (11) to fix the body (11) and the base cover body (91) thereto.

3. The electric-powered sun visor for a vehicle according to claim 1,
wherein the power transmitting part (20) comprises:
a body (21) mounted on one side surface of the mounting frame (10) and having a motor mounted at the inside thereof to generate power from an output shaft of the motor through the driving of the motor by the application of power thereto;
a helical screw fastening hole (22) formed on one side surface of the body (21) to fasten one side surface of the helical screw (30) passing through a through-hole (622) of the spring cover (62) thereto; and
a screen cover insertion hole (23) formed below the helical screw fastening hole (22) to insertingly mount the spring cover (62) to which the body (61) of the tension maintaining part (60) is fixed thereinto.

4. The electric-powered sun visor for a vehicle according to claim 1,
wherein the movement inducing part (30) comprises:
a body (31) mounted into the first mounting hole (12) of the mounting frame (10), passed through the through-hole (622) of the spring cover (62) of the tension maintaining part (60), and fastened on one side surface thereof to the helical screw fastening hole (22) of the power transmitting part (20) in such a manner as to be rotated in clockwise or counterclockwise direction by the positive or negative current transmitted directly from the output shaft of the motor of the power transmitting part (20) to the helical screw fastening hole (22); and
a screw line (32) having an inclined surface between 15° and 45° formed on one side peripheral surface (34) of the body (31) in such a manner where a forward arranged screw line is formed or a reverse arranged screw line is formed to have the reverse inclined surface to the inclined surface of the forward arranged screw line, while the screw line (32) being formed on the other side peripheral surface (35) of the body (31) in such a manner where the reverse arranged screw line or the forward arranged screw line is formed reversely with respect to the forward arranged screw line or the reverse arranged screw line formed on one side peripheral surface (34) of the body (31).

5. The electric-powered sun visor for a vehicle according to claim 1,
wherein each horizontal distance moving part (40) comprises:
a body (41) mounted to the outside of one side peripheral surface (34) and the other side peripheral surface (35) of the helical screw body (31) on which the forward or reverse arranged screw line (32) of the movement inducing part (30) is formed in such a manner as to be moved forward to the center (33) of the helical screw body (31) or moved backward to one side peripheral surface (34) and the other side peripheral surface (35) of the body (31) in a horizontal direction thereof through the rotation of the helical screw body (31) in the clockwise or counterclockwise direction;
a fixing hole (42) defined as a space portion formed on the outside of the body (41) to fix the outer peripheral surface of the helical screw body (31) and to fasten the linkage (50) thereto;
linkage fastening holes (43) formed on the top and bottom portions of the fixing hole (42); and
a through-hole (44) formed on the side surface of the body (41) to pass one side peripheral surface (34) of the helical screw (30) therethrough.

6. The electric-powered sun visor for a vehicle according to claim 1,
wherein each folding part (50) comprises:
a body (51) fastened to the slide gear as the horizontal distance moving part (40) and the support bar cover (83) of the screen part (80) in such a manner as to be folded to the inside and outside of the mounting frame (10) in accordance with the forward and backward movements of the horizontal distance of the slide gear (40);
a first fastening hole (52) formed on the upper portion of the body (51) to fasten the linkage fastening holes (43) of the slide gear (40) thereto; and
a second fastening hole (53) formed on the lower portion of the body (51) to fasten a linkage fastening holes (831) of the support bar cover (83) thereto.

7. The electric-powered sun visor for a vehicle according to claim 1,
wherein the tension maintaining part (60) comprises:
the cylindrical body (61) mounted into the second mounting hole (13) of the mounting frame (10) to develop or return the shading screen (81) wound on the outer peripheral surface thereof;
the spring cover (62) having a fastener fastening hole (621) adapted to fasten a fastener (661) of a fastening bar (66) mounted on one side peripheral surface of the body (61) thereto and the through-hole (622) formed above the fastener fastening hole (621) to pass one side peripheral surface (34) of the helical screw (30) therethrough;
the spring (63) to which extension force is applied;
the first and second noise preventing tubes (64) and (64') made of a rubber material and mounted outside and inside the spring (63) to prevent the generation of noise when the shading screen (81) is developed or returned;
the spring cap (65) having a spring mounting portion (652) on which the other side surface of the spring (63) is fixedly mounted formed on the other side surface thereof and a fastening bar insertion hole (651) formed on one side surface thereof to insert the fastening bar (66) thereinto;
the fastening bar (66) inserted into the spring (63) having the first and second noise preventing tubes (64) and (64') and into the spring cap (65) and having the fastener (661) mounted on one side surface thereof in such a manner as to be fixedly inserted into the fastener fastening hole (621) of the spring cover (62) and the fastening hole (662) formed on the other side surface thereof in such a manner as to fasten a roll fastener (671) of the spring roll cap (67) inserted into the other side surface of the body (61) to fasten the fastening bar (66) thereto; and
the spring roll cap (67) inserted into the other side surface of the body (61) and having the roll fastener (671) fastened to the fastening hole (662) of the fastening bar (66).

8. The electric-powered sun visor for a vehicle according to claim 1,
wherein the fixing part (70) comprises:
the center stopper (71) fixed to the center (33) of the helical screw (30) and having a body (711) adapted to restrict the moving distances of the slide gears (40) and prevent the collision of the slide gears (40) when the slide gears (40) are horizontally moved in reverse directions to each other by means of the forward arranged screw line (32) or the reverse arranged screw line (32) and a fixing hole (712) formed in the interior of the body (711);
the shaft guides (72) fixed to both side surfaces (34) and (35) of the helical screw (30), each shaft guide (72) having a body (721) adapted to restrict the escape to the outside and movement of each slide gear (40) and a fixing hole 722 formed in the interior of the body (722); and
the screen roll guides (73) fixed to both side surfaces of the screen roll (60), each screen roll guide (73) having a body (731) to prevent the escape to the outside of the screen roll (60) and a fixing hole (732) formed in the interior of the body (732).

9. The electric-powered sun visor for a vehicle according to claim 1,
wherein the screen part (80) comprises:
the shading screen (81) as a body adapted to be wound on the outer peripheral surface of the body (61) of the tension maintaining part (60) in such a manner as to be returned or developed to/from the inside and outside of the body (61);
the support bar (82) mounted on the bottom portion of the body (81) to prevent the shading screen (81) from sagging or wrinkling upon the development of the shading screen (81); and
the support bar covers (83) coupled to both side surfaces of the support bar 82, each having the linkage fastening hole (831) fastened to correspond to the second fastening hole (53) of the linkage (50) as the folding part and support bar fastening holes (832) formed on the interior and side surface thereof in such a manner as to be fastened to both side surfaces of the support bar (82).

10. The electric-powered sun visor for a vehicle according to claim 1,
wherein each base cover (90) comprises:
the body (91) coupled to the cover mounting holes (14) formed on both side surfaces of the mounting frame (10) to prevent each part (20) to (70) from being escaped to the outside and to improve the outer appearance of the sun visor (100);
the insertion hole (92) formed in the interior of the body (91) to insert the rear surface portion of the body (21) of the power transmitting part (20); and
the fixing holes (93) formed to correspond to the fixing holes (15) of the mounting frame (10) in such a manner as to allow each base cover (90) and the mounting frame (10) to be fixed through fasteners to the vehicle frame disposed above the front surface glass or the rear surface glass in front of or behind the driver seat or the passenger seat in the interior of the vehicle.

11. The electric-powered sun visor for a vehicle according to claim 1,
wherein the number of electric-powered sun visors is plural or singular.

12. The electric-powered sun visor for a vehicle according to any one of claim 1 or 7, wherein the tension maintaining part (60) further comprises a non-woven fabric (68) mounted on the outer peripheral surface of the second noise preventing tube (64').
